# EUROPÄISCHE PATENTSCHRIFT

(11) **EP 0 527 416 B1**
(45) Veröffentlichungstag und Bekanntmachung des Hinweises auf die Patenterteilung: **04.12.1996**
(21) Anmeldenummer: 92113224.7
(22) Anmeldetag: 03.08.1992
(51) Int. Cl.: G21F 9/06, C02F 1/72, A62D 3/00

(54) **Verfahren und Einrichtung zur Entsorgung einer organischen Substanz**
Process and device for disposing of an organic substance
Procédé et dispositif pour l'élimination d'une substance organique

(30) Priorität: 14.08.1991 DE 4126971
(43) Veröffentlichungstag der Anmeldung: 17.02.1993
(73) Patentinhaber: SIEMENS AKTIENGESELLSCHAFT, 80333 München (DE)
(72) Erfinder: Emmert, Hermann, W-8801 Burgbernheim (DE); Gassen, Rainer, Dr., W-8510 Fürth (DE)

(56) Entgegenhaltungen:
- EP-A- 0 342 876
- WO-A-92/03829
- DE-A- 3 933 511
- US-A- 4 624 792
- US-A- 4 693 833

## Beschreibung

Die Erfindung betrifft ein Verfahren zur Entsorgung einer organischen Substanz, die bei der Dekontamination radioaktiv kontaminierter Oberflächen von Bauteilen als Komplexbildner eingesetzt wird, und/oder eines bei einer solchen Dekontamination gebildeten Komplexes. Die Erfindung betrifft auch eine Einrichtung zur Entsorgung einer organischen Substanz.

Der Ausdruck "organische Substanz" umfaßt dabei auch eine Lösung der organischen Substanz, in der Regel in Wasser.

Bei der Oberflächendekontamination radioaktiv kontaminierter Bauteile werden häufig organische Säuren eingesetzt. Diese Säuren können dabei als Komplexbildner dienen, die mit die Kontamination tragenden Ablagerungen Komplexe bilden. Die Komplexe sind leicht löslich, so daß auf diese Weise eine Reinigung und Dekontamination der Bauteiloberfläche erfolgt. Nach Durchführung eines solchen Dekontaminationsverfahrens verbleibt eine Lösung, die sowohl unverbrauchten Komplexbildner, als auch bei der Dekontamination gebildete Komplexe enthält. Diese Lösung muß entsorgt werden. Da die Lösung auch die beim Dekontaminationsverfahren entfernten radioaktiven Stoffe enthält, ist eine sichere und damit aufwendige Entsorgung notwendig. Dazu wird die Lösung verfestigt und in Fässern einer Endlagerung zugeführt. Zur Verminderung der einem Endlager zuzuführenden Mengen ist bekannt, die nach einem Dekontaminationsverfahren verbleibende Lösung durch Verdampfen ihres Wasseranteiles zu konzentrieren oder durch Aufbereitung in einem Ionenaustauscher radioaktive und inaktive Bestandteile zu entfernen. Beim Bekannten verbleiben ein Verdampferkonzentrat oder Kationen- und Anionenaustauscherharze, die beide endgelagert werden müssen.

Aus der DE 36 44 080 A1 ist zu entnehmen, daß zum Entgiften industrieller Abwässer Wasserstoffperoxid und als Katalysator ein Salz, z.B. Kupfersulfat oder Kaliumpermanganat,eingesetzt werden können.

Die mit einem solchen Verfahren zu entfernenden Giftstoffe sind nicht mit Komplexbildnern, die bei der Dekontamination eingesetzt werden, oder mit dabei gebildeten Komplexen vergleichbar.

Darüber hinaus wird als Katalysator stets ein Salz wie Kaliumpermanganat eingesetzt. Ein solcher Katalysator geht in Lösung. Er kann folglich nicht zurückgewonnen werden. Außerdem bildet der Katalysator nach der Entgiftung einen Sekundärabfall, der das Volumen des Restabfalls wieder vergrößert.

Der Erfindung lag die Aufgabe zugrunde, ein Verfahren zur Entsorgung einer organischen Substanz anzugeben, bei dem ein deutlich kleineres einem Endlager zuzuführendes Restvolumen übrig bleibt, als bei bekannten Entsorgungsverfahren. Dabei soll insbesondere kein Sekundärabfall gebildet werden. Es soll auch eine geeignete Einrichtung zur Entsorgung einer organischen Substanz angegeben werden.

Die erstgenannte Aufgabe wird gemäß der Erfindung dadurch gelöst, daß der Substanz in Kontakt mit einem Edelmetallkatalysator Wasserstoffperoxid zugeleitet wird, wodurch als wesentliche Zersetzungsprodukte Kohlenstoffdioxid und Wasser entstehen.

Mit dem Verfahren nach der Erfindung wird der Vorteil erzielt, daß die zu entsorgende organische Substanz, die ein Komplexbildner oder ein durch diesen gebildeter Komplex ist, nicht nur von Verunreinigungen befreit oder durch Verdampfen aufkonzentriert und eingeengt wird, sondern daß die organische Substanz selbst in Substanzen aufgespaltet wird, die keiner Endlagerung bedürfen. Mit dem Verfahren nach der Erfindung wird die organische Substanz nicht nur in ihrem Volumen reduziert, sondern beseitigt, ohne daß ein Sekundärabfall anfällt.

Das Verfahren gemäß der Erfindung ist besonders gut einzusetzen bei organischen Säuren mit kurzen Kohlenstoffketten, beispielsweise bei Oxalsäure, Ameisensäure oder Glyoxylsäure. Es ist auch einsetzbar zur Entsorgung von Aldehyden.

Bei der Entsorgung einer nach einem Dekontaminationsverfahren verbleibenden Restlösung wird durch das Aufspalten der organischen Inhaltsstoffe der Restlösung erreicht, daß nurmehr eine sehr geringe Menge an Abfallösung anfällt, die zudem frei von Komplexbildnern ist. Anschließend kann somit die Abfallösung in einem Verdampfer auf ein noch kleineres Volumen reduziert werden. Bei einer möglichen zusätzlichen Reinigung der Abfallösung in einem Ionenaustauscher wird für den Entzug von Reststoffen aus der Abfallösung ein geringeres Harzvolumen benötigt, als bei einer Reinigung ohne zuvor erfolgtem Aufspalten der organischen Inhaltsstoffe. Vorteilhafterweise kommt man beim Einsatz des Verfahrens nach der Erfindung mit einem sehr kleinen Endlager aus.

Beispielsweise wird das Verfahren zur Entsorgung einer organischen Substanz gemäß der Erfindung als Zwischenschritt zwischen mehreren Dekontaminationsschritten durchgeführt. Das ist möglich, da das Entsorgungsverfahren gemäß der Erfindung nur wenig Zeit benötigt. Falls nur ein Dekontaminationsschritt vorgesehen ist, kann das Entsorgungsverfahren dem Dekontaminationsschritt unmittelbar angeschlossen werden. Stets ist eine enge Koppelung von Dekontamination und Entsorgung möglich.

Beispielsweise wird die organische Substanz während der Durchführung des geschilderten Verfahrens nach der Erfindung mit ultraviolettem Licht bestrahlt. Es kann auch eine andere elektromagnetische Strahlung, mit anderer Wellenlänge, eingesetzt werden. Durch die Bestrahlung mit ultraviolettem Licht wird das Aufspalten der Substanz in Kohlenstoffdioxid und Wasser beschleunigt. Eine solche Bestrahlung ist besonders dann wichtig, wenn die zu entsorgende organische Substanz eine OH-Gruppe aufweist.

Insbesondere bei zusätzlicher Bestrahlung, z.B. mit ultraviolettem Licht werden mit dem Verfahren nach der Erfindung stickstoffhaltige organische Stoffe abgebaut. Der Abbau erfolgt nicht nur zu Kohlenstoffdioxid und Wasser, sondern auch zu kurzkettigen stickstoffhaltigen Stoffen, z.B. zu Aminen.

Der Komplexbildner kann beispielsweise eine organische Säure sein.

Beispielsweise wird die Substanz mit einem Palladiumkatalysator in Kontakt gebracht. Auch kann die Substanz mit einem Katalysator, bestehend aus einem mit Palladium dotierten Ionenaustauscher, in Kontakt gebracht werden.

Genannte Katalysatorarten können in einer Raumform in der Lösung angeordnet sein. Sie können auch als Pulver oder Granulat der zu entsorgenden Lösung beigemischt werden oder die Lösung kann durch einen mit dem Katalysator gefüllten Behälter geleitet werden.

Das entstehende Kohlenstoffdioxid kann beispielsweise durch Beaufschlagung der Zersetzungsprodukte, Kohlenstoffdioxid und Wasser, mit einem Druck in Lösung gehalten werden. Damit wird der Vorteil erzielt, daß keine Glasblasen in der Lösung entstehen.

Mit dem Verfahren zur Entsorgung einer organischen Substanz gemäß der Erfindung wird der Vorteil erzielt, daß die organische Substanz, ohne daß ein Sekundärabfall entsteht, weitgehend in Substanzen aufgespaltet wird, die keiner besonderen Endlagerung bedürfen.

Die Aufgabe, eine geeignete Einrichtung zur Entsorgung anzugeben, wird gemäß der Erfindung dadurch gelöst, daß eine Zuleitung für die organische Substanz und eine Zuleitung für Wasserstoffperoxid mit einem Katalysatorbehälter in Verbindung steht, der einen Edelmetallkatalysator enthält und eine Ableitung für Zersetzungsprodukte aufweist.

In einem solchen Katalysatorbehälter kann die organische Substanz schnell und zuverlässig aufgespaltet und die Zersetzungsprodukte können abgeleitet werden.

Der Katalysatorbehälter kann ein einfacher oben offener Behälter sein, bei dem die Öffnung als Zuleitung und Ableitung dient.

Dabei verlassen Gase den Behälter sofort, während Wasser und nicht aufspaltbare Restflüssigkeiten zunächst im Behälter zurückbleiben und später herausgegossen werden.

Beispielsweise liegen die Zuleitungen auf einem niedrigeren Niveau als die Ableitung. Nach einem anderen Beispiel liegen die Zuleitungen auf einem höheren Niveau als eine Flüssigkeitsableitung und auf einem niedrigeren Niveau als eine Gasableitung. Mit dieser Ausführungsform wird der Vorteil erzielt, daß nach dem Aufspalten der organischen Substanz flüssige Bestandteile nach unten abfließen, während gasförmige Bestandteile nach oben aufsteigen und dort den Katalysatorbehälter verlassen können.

Beispielsweise ist der Katalysatorbehälter schräggestellt angeordnet. Die Gasableitung befindet sich dabei am höchsten Punkt des Behäters. Auf diese Weise kann der nach unten gerichtete Strom der zugeführten organischen Substanz von der nach oben gerichteten Gasströmung getrennt werden.

Das Material des Katalysators kann in der Substanz schwimmen. Der Katalysator kann auch in einer festen Raumform in einem Katalysatorbett angeordnet sein.

Der Einrichtung gemäß der Erfindung kann eine ultraviolette Lampe, insbesondere eine Tauchlampe, zugeordnet sein, durch deren ultraviolettes Licht das in der Einrichtung durchgeführte Verfahren beschleunigt werden kann. Statt der Quelle für ultraviolettes Licht kann eine Quelle für eine andere elektromagnetische Strahlung vorhanden sein.

Mit der Einrichtung gemäß der Erfindung wird der Vorteil erzielt, daß eine organische Substanz, ohne daß Sekundärabfall entsteht, auf einfache Weise in Substanzen aufgespaltet werden kann, die keiner besonderen Endlagerung bedürfen.

Beispiele für eine Einrichtung zur Durchführung des Verfahrens zur Entsorgung einer organischen Substanz gemäß der Erfindung werden anhand der Zeichnung näher erläutert:
- Figur 1: zeigt einen von oben nach unten durchströmten Katalysatorbehälter.
- Figur 2: zeigt einen von unten nach oben durchströmten Katalysatorbehälter mit Katalysatorbett.

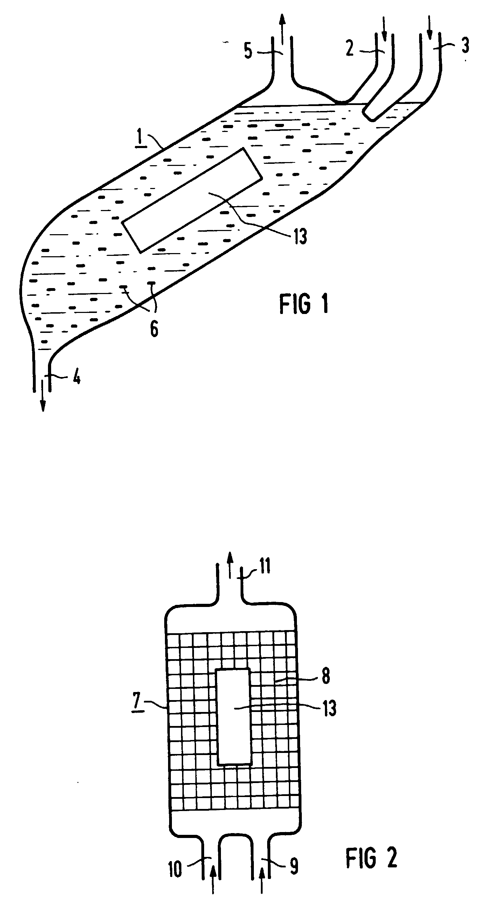

Nach Figur 1 weist ein Katalysatorbehälter 1, der zur Senkrechten schräggestellt ist, in einem oberen Abschnitt eine Zuleitung 2 für die zu entsorgenden Komplexbildner und Komplexe, die in gelöster oder flüssiger Form vorliegen, und eine Zuleitung 3 für Wasserstoffperoxid auf. Am unteren Ende des Katalysatorbehälters 1 befindet sich eine Ableitung 4 für flüssige Zersetzungsprodukte und andere Flüssigkeiten. Am höchsten Punkt des Katalysatorbehälters 1 ist eine Gasableitung 5 für gasförmige Zersetzungsprodukte und andere Gase angeordnet. Durch die Schrägstellung des Katalysatorbehälters 1 befindet sich die Gasableitung 5 selbst bei einem zylindrisch geformten Katalysatorbehälter 1 an der höchsten Stelle. Im Katalysatorbehälter 1 befindet sich ein Katalysator 6. Wenn die Einrichtung in Betrieb ist, schwimmt der Katalysator 6 in der dann im Katalysatorbehälter 1 befindlichen Flüssigkeit. Der Katalysator 6 kann aber auch in einer bestimmten Form, einem Katalysatorbett, im Katalysatorbehälter 1 angeordnet sein. Am Katalysator 6 bilden sich aus der zu entsorgenden Substanz zusammen mit Wasserstoffperoxid Kohlenstoffdioxid und Wasser. Das Wasser gelangt zusammen mit anderen flüssigen Bestandteilen, die mit der organischen Substanz in den Katalysatorbehälter 1 gelangen, über die Flüssigkeitsableitung 4 aus dem Katalysatorbehälter 1 heraus. Das am Katalysator 6 aus der zu entsorgenden Substanz und Wasserstoffperoxid gebildete Kohlenstoffdioxid gelangt über die Gasableitung 5 aus dem Katalysatorbehälter 1 heraus. Durch die Schrägstellung des Katalysatorbehälters 1 und die Anordnung der Gasableitung 5 an einem höheren Niveau als die Zuleitungen 2 und 3 kann kein Gas in die Zuleitungen 2 und 3 gelangen.

Nach Figur 2 weist eine Ausführungsform der Einrichtung nach der Erfindung einen Katalysatorbehälter 7 auf, der einen Katalysator 8 enthält und an seinem unteren Ende eine Zuleitung 9 für die zu entsorgende Substanz und eine Zuleitung 10 für Wasserstoffperoxid hat. Im oberen Bereich des Katalysatorbehälters 7 befindet sich eine Ableitung 11 für die Zersetzungsprodukte und für Restsubstanzen, die nicht zersetzt werden. Der Katalysator 8 ist hier in einer Raumform in einem Katalysatorbett angeordnet, kann jedoch auch in einer Flüssigkeit im Katalysatorbehälter 7 verteilt sein.

Dem Katalysatorbehälter 1,7 kann eine Ultraviolettlampe 13 zugeordnet sein, da durch ultraviolettes Licht das Verfahren beschleunigt werden kann. Die Ultraviolettlampe 13 ist in der Regel als Tauchlampe ausgebildet und befindet sich im Katalysatorbehälter 1,7.

Der Katalysator 6,8 kann bereits in der über die Zuleitung 2,9 zugeleiteten Flüssigkeit vorhanden sein.

Falls der Katalysator 6,8 in der Form von kleinen Teilchen in der Flüssigkeit schwimmt, kann er durch ein Sieb im Katalysatorbehälter 1,7 gehalten werden. Falls der Katalysator 6,8 in einem Katalysatorbett angeordnet ist, kann er den Katalysatorbehälter 1,7 nicht verlassen.

Mit dem Verfahren und mit der Einrichtung gemäß der Erfindung können, ohne daß Sekundärabfall entsteht, organische Komplexbildner und Komplexe aufgespaltet werden, wobei die Endprodukte dieser Aufspaltung nicht mehr einem Endlager zugeführt werden müssen. Das Endvolumen, das beseitigt werden muß, ist dann nur noch klein.

## Patentansprüche

1. Verfahren zur Entsorgung einer organischen Substanz, die bei der Dekontamination radioaktiv kontaminierter Oberflächen von Bauteilen als Komplexbildner eingesetzt wird, und/oder eines bei einer solchen Dekontamination gebildeten Komplexes,
**dadurch gekennzeichnet**, daß der Substanz in Kontakt mit einem Edelmetallkatalysator (6,8) Wasserstoffperoxid zugeleitet wird, wodurch als wesentliche Zersetzungsprodukte Kohlenstoffdioxid und Wasser entstehen.

2. Verfahren nach Anspruch 1,
**dadurch gekennzeichnet**, daß es bei mehreren Dekontaminationsschritten als Zwischenschritt durchgeführt wird.

3. Verfahren nach einem der Ansprüche 1 oder 2,
**dadurch gekennzeichnet**, daß mit ultraviolettem Licht bestrahlt wird.

4. Verfahren nach einem der Ansprüche 1 bis 3,
**dadurch gekennzeichnet**, daß die Substanz eine organische Säure ist.

5. Verfahren nach einem der Ansprüche 1 bis 4,
**dadurch gekennzeichnet**, daß die Substanz mit einem Palladiumkatalysator in Kontakt gebracht wird.

6. Verfahren nach Anspruch 5,
**dadurch gekennzeichnet**, daß die Substanz mit einem Katalysator bestehend aus einem mit Palladium dotierten Ionenaustauscher in Kontakt gebrachtgebracht wird.

7. Verfahren nach einem der Ansprüche 1 bis 6,
**dadurch gekennzeichnet,** daß das entstehende Kohlenstoffdioxid durch Beaufschlagung der Zersetzungsprodukte mit einem Druck in Lösung gehalten wird.

8. Einrichtung zur Entsorgung einer organischen Substanz, die bei der Dekontamination radioaktiv kontaminierter Oberflächen von Bauteilen als Komplexbildner eingesetzt wird, und/oder eines bei einer solchen Dekontamination gebildeten Komplexes,
**dadurch gekennzeichnet,** daß eine Zuleitung (2,9) für die organische Substanz und eine Zuleitung (3,10) für Wasserstoffperoxid mit einem Katalysatorbehälter (1,7) in Verbindung steht, der einen Edelmetallkatalysator (6,8) enthält und eine Ableitung (4,5,11) für Zersetzungsprodukte aufweist.

9. Einrichtung nach Anspruch 8,
**dadurch gekennzeichnet,** daß die Zuleitungen (9,10) auf einem niedrigerem Niveau liegen als die Ableitung (11).

10. Einrichtung nach Anspruch 8,
**dadurch gekennzeichnet,** daß die Zuleitungen (2,3) auf einem höheren Niveau liegen als eine Flüssigkeitsableitung (4) und auf einem niedrigeren Niveau als eine Gasableitung (5).

11. Einrichtung nach einem der Ansprüche 8 bis 10,
**dadurch gekennzeichnet**, daß der Katalysatorbehälter (1,7) schräggestellt ist.

12. Einrichtung nach einem der Ansprüche 8 bis 11,
**dadurch gekennzeichnet**, daß ihr eine Ultraviolettlampe (13) zugeordnet ist.

## Claims

1. Method for disposing of an organic substance which is used in the decontamination of radioactively contaminated surfaces of components as a complexing agent, and/or for disposing of a complex formed during such a decontamination, characterized in that hydrogen peroxide is supplied to the substance in contact with a noble metal catalyst (6, 8), whereby carbon dioxide and water are produced as essential decomposition products.

2. Method according to claim 1, characterized in that with several decontamination steps it is carried out as an intermediate step.

3. Method according to one of claims 1 or 2, characterized in that radiation takes place with ultraviolet light.

4. Method according to one of claims 1 to 3, characterized in that the substance is an organic acid.

5. Method according to one of claims 1 to 4, characterized in that the substance is brought into contact with a palladium catalyst.

6. Method according to claim 5, characterized in that the substance is brought into contact with a catalyst comprising an ion exchanger doped with palladium.

7. Method according to one of claims 1 to 6, characterized in that the carbon dioxide produced is held in solution by loading the decomposition products with a pressure.

8. Device for disposing of an organic substance which is used in the decontamination of radioactively contaminated surfaces of components as a complexing agent, and/or for disposing of a complex formed during such a decontamination, characterized in that a supply line (2, 9) for the organic substance and a supply line (3, 10) for hydrogen peroxide is connected to a catalyst container (1, 7) which contains a noble metal catalyst (6, 8) and has an outlet (4, 5, 11) for decomposition products.

9. Device according to claim 8, characterized in that the supply lines (9, 10) lie at a lower level than the outlet (11).

10. Device according to claim 8, characterized in that the supply lines (2, 3) lie at a higher level than a liquid outlet (4) and at a lower level than a gas outlet (5).

11. Device according to one of claims 8 to 10, characterized in that the catalyst container (1, 7) is tilted.

12. Device according to one of claims 8 to 11, characterized in that an ultraviolet lamp (13) is associated with it.

## Revendications

1. Procédé d'élimination d'une substance organique qui est utilisée comme complexant lors de la décontamination de surfaces contaminées par la radioactivité d'éléments de construction, et/ou d'un complexe formé lors d'une décontamination de ce genre,
caractérisé en ce qu'on envoie du peroxyde d'hydrogène sur la substance au contact d'un catalyseur de métal précieux (6,8), grâce à quoi il se forme comme produits de décomposition essentiels du dioxyde de carbone et de l'eau.

2. Procédé selon la revendication 1, caractérisé en ce qu'il est effectué comme étape intermédiaire dans le cas où il y a plusieurs étapes de décontamination.

3. Procédé selon l'une des revendications 1 ou 2, caractérisé en ce qu'on expose à de la lumière ultraviolette.

4. Procédé selon l'une des revendications 1 à 3, caractérisé en ce que la substance est un acide organique.

5. Procédé selon l'une des revendications 1 à 4, caractérisé en ce que la substance est mise en contact avec un catalyseur à base de palladium.

6. Procédé selon la revendication 5, caractérisé en ce que la substance est mise en contact avec un catalyseur constitué d'un échangeur d'ions dopé au palladium.

7. Procédé selon l'une des revendications 1 à 6, caractérisé en ce que le dioxyde de carbone se formant est maintenu en solution par une pression sur les produits de décomposition.

8. Dispositif pour l'élimination d'une substance organique qui est utilisée comme complexant lors de la décontamination de surfaces contaminées par la radioactivité d'éléments de construction, et/ou d'un complexe formé lors d'une décontamination de ce genre, caractérisé en ce qu'un conduit d'alimentation (2,9) pour la substance organique et un conduit d'alimentation (3,10) pour le peroxyde d'hydrogène communiquent avec un récipient de catalyseur (1,7), qui contient un catalyseur de métal précieux (6,8), et qui comporte un conduit d'évacuation (4,5,11) pour les produits de décomposition.

9. Dispositif selon la revendication 8, caractérisé en ce que les conduits d'alimentation (9,10) sont à un niveau plus bas que le conduit d'évacuation (11).

10. Dispositif selon la revendication 8, caractérisé en ce que les conduits d'alimentation (2,3) sont à un niveau plus élevé qu'un conduit d'évacuation de liquide (4) et à un niveau plus bas qu'un conduit d'évacuation des gaz (5).

11. Dispositif selon l'une des revendications 8 à 10, caractérisé en ce que le récipient de catalyseur (1,7) est en position inclinée.

12. Dispositif selon l'une des revendications 8 à 11, caractérisé en ce qu'une lampe à rayons ultraviolets (13) lui est adjointe.
